# EUROPEAN PATENT APPLICATION

(11) **EP 1 683 421 A2**
(43) Date of publication of application: **26.07.2006**
(21) Application number: 06100408.1
(22) Date of filing: 16.01.2006
(51) Int. Cl.: A21C 3/02

(54) **Mechanism for preparing puff pastry conveyed on a belt**

(30) Priority: 21.01.2005 IT TO20050031
(71) Applicant: Minipan S.r.l., 48024 Massa Lombarda RA (IT)
(72) Inventor: Fusari, Bruno, 48012, Bagnacavallo (RA) (IT); Zaffagnini, Bruno, 48017, Conselice (RA) (IT)
(74) Representative: Luppi, Luigi

(57) **Abstract**

Mechanism (1) for preparing puff pastry (5) conveyed on a belt (7) preferably coming from a hopper and from an extruder of known type wherein a motor unit (2) generates a rotational advancing movement (11) in the same direction of movement (10) as the belt (7) below of a device with several idle rotatable rollers (3) substantially free to rotate on themselves, and compressing the advancing puff pastry (5) in calibrated interference through said belt underneath (7), said mechanism kneads and stretches the pastry (5) by rolling it before the cutting unit, or prior-art shredder of the final product.

## Description

The present invention relates to a mechanism for preparing puff pastry conveyed on a belt that is able to obtain a fundamental role in the quality of the final product inasmuch as a device with several idle rotating rollers knead and extend the puff pastry moving on the belt underneath, rolling it before the cutting unit, or the shredder for forming the final product.

As is known, handling pastry and in particular puff pastry through the use of machines or of mechanisms or of automatic devices is of significant importance.

It has been possible to show that the greater the kneading and repetitive stretching of the puff pastry the better the features of the dough during baking and therefore the mechanical stress on the dough has a fundamental role in the quality of the baked product.

In fact, the increase of pressing and rolling stress makes the dough impermeable to the water steam that forms from the water during baking so that steam pressure is exerted on the internal layers of the product, which, being subjected to this action, expands, presenting a sufficient volume of pleasant softness.

For some time, operators of the sector have tried to improve the quality of puff pastry, particular in terms of the lightness and volume of the product after baking. The aim of the present invention is to provide a mechanism, or a device to be combined with the outlet of the machines producing puff pastry to automatically make a swollen pastry with the formation of the volume required to confer on the product the lightness and softness that are appreciated by the consumer.

Within this aim, the object is also to ensure that such a mechanism operates in a substantially continuous manner and with a mechanical action, thus making it highly productive and particularly suitable for operating in production units.

Still within the framework of this aim, the object is to devise a mechanism of great reliability and operating efficacy, of relative simplicity and which is economical advantageous.

The mechanism of the present invention achieves the indicated aims and objects to be combined in an automatic line for puff pastry conveyed on a conveyor belt, preferably coming from a hopper and from an extruder in which a motor unit generates a rotation advancing movement, in the direction of movement of the conveyor belt underneath, of a device with several idle rotating rollers that are substantially free to rotate on themselves that by resting and compressing in calibrated interference the puff pastry advancing by means of said conveyor belt underneath, kneads and extends the pastry, rolling it before it is conveyed to the a known cutting unit, or shredder.

According to an embodiment, the mechanism for preparing puff pastry of the present invention is preferably of a prior-art electric or electronic nature for continuously varying the rotation value in relation to the advancing speed value of the conveyor belt underneath.

According to a further embodiment, the mechanism for preparing puff pastry has circular end flanges made integral with the motor shaft and made with a profile suitable for supporting said idle rollers that are rotatable on themselves. According to a further embodiment, the idle rotatable rollers are fixed to side plates of the articulated links of a drive chain for generating in said rotatable rollers movement trajectories that are decomposable into straight and circular portions.

According to a further embodiment, the mechanism for preparing puff pastry of the present invention has a lever mechanism that is able to establish stable precise millimetric operating interference values between the idle rotatable rollers and the puff pastry underneath.

The invention will be disclosed in detail below on the basis of the embodiment given schematically by way of example in the figures of the attached table, that summarily illustrates the features of the invention, it having to be indicated that the attached figures, and the disclosure that will be made thereof, correspond to a preferred embodiment to make its manner of embodiment more comprehensible, but possible variations of reciprocal positions of the elements and also the consequent simplifications that could arise therefrom and all the constructional variations included in the general idea are comprised in the protection requested, that is set out in the attached graphic table in which:

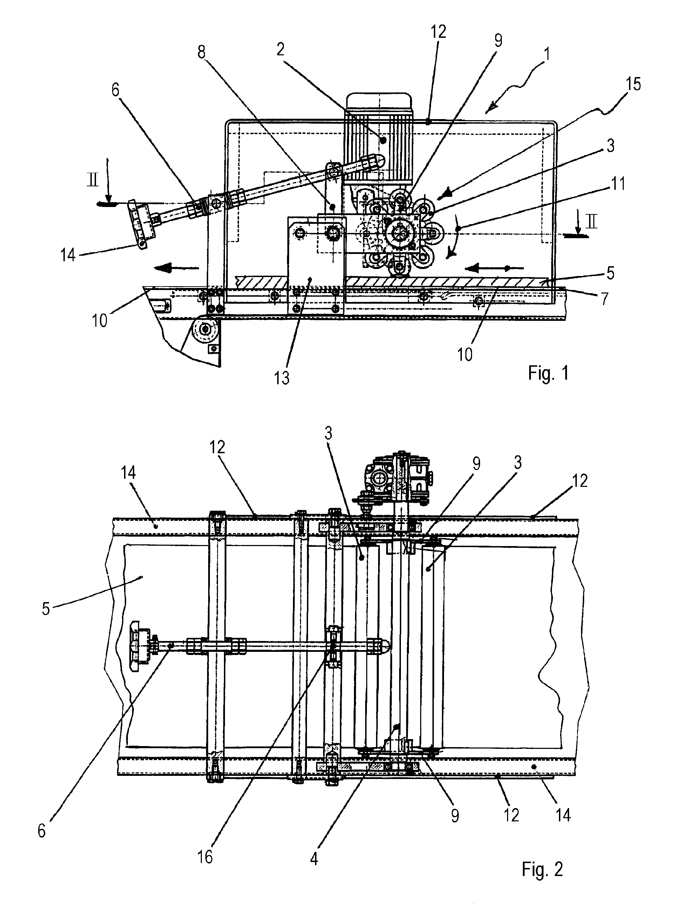

- figure 1 is a lateral schematic view of the mechanism of the present invention, that illustrates the device with several idle rotatable rollers and the rotational driving motor unit and said view also illustrates both the lever mechanism that regulates the interference calibration between the idle rotatable rollers and the puff pastry underneath and also the conveyor belt;
- figure 2 is a schematic section view from above of the mechanism for preparing puff pastry in figure 1.

In the figures, corresponding parts, or with identical functions, are provided, for simplicity, with identical reference characters.

In the figures, for the purpose of clarity of the whole, the parts that are not necessary for the comprehension of the invention are omitted, inasmuch as they are known and also because they do not concern the operation of the present invention.

In the attached drawing we have:

1 is the mechanism for preparing puff pastry of the present invention in the schematic entirety thereof; 2 is the motor unit that generates the rotational movement of the device 15 with several idle rotatable rollers; 3 is the idle rotatable roller supported and connected to the circular end flanges 9, the latter made integral with the motor shaft 4 and made to have a suitable profile for supporting said idle rollers 3 that are rotatable around themselves; 5 is the puff pastry supported and moved by the conveyor belt 7 and said puff pastry when preferably coming from an extrusion unit upstream is continuously advanced in the motion direction 10 to interfere with the rollers 3 of the device 15 provided with rotational movement 11 in the same direction as the advancing motion of the puff pastry 5; 6 is the screw and nutscrew shaft that is drivable by means of a knob 14, that enables rotation, to regulate interference calibration through a lever mechanism 8, between the idle rotatable rollers 3 and the puff pastry 5 below and said lever mechanism 8 is fixed by a pivot to the frame 13; 12 is the frame, or parallelpipedon boxed casing of the mechanism 1 of the present invention; 16 is the mechanical locking mechanism of the rotation of the screw shaft 6 activatable after establishing and setting the precise millimetric interference value between the rollers 3 and the puff pastry 5 underneath; 14 is the lateral projection protecting the belt 7 and the puff pastry 5.

The operation of the mechanism for preparing puff pastry conveyed on the a according to the present invention is now disclosed with reference to the only graphic table, that illustrates a constructional configuration that is easy to understand. The puff pastry line, as is known, provides for an extruding unit of the pastry accumulated in a hopper above and for a cut portioning unit that prepares portions, in which the weight and dimensions of the products before baking are calibrated. Neither of the aforementioned units is illustrated as they are already known.

The complete puff pastry line comprises between the extruder and the portioning unit the mechanism of the present invention. The line operator, depending on the height of the puff pastry 5 and on the parameters of the productive process, establishes and sets by rotating the knob 14 that rotates the screw shaft 6 the interference value by means of the lever mechanism 8 between the idle rotatable rollers 3 and the advancing pasty 5. After the operating position of the device 15 has been established, the operator locks the lever mechanism 8 by means of the contrivance 15. The motor unit 2 is driven that generates rotational movement 11 of the flanges 9.

In the rotation 11 in the same direction as the advancing motion 10 of the belt 7 the idle rotatable rollers 3 noticeably interfere with the puff pastry 5 underneath, which, compressed by each roller 3, is subjected to an accentuated continuous kneading and stretching action similarly to a fixed rolling unit.

Modifications of an applicational nature can be provided and so the elements and the contrivances disclosed and illustrated may be replaced by other equivalent elements and contrivances without the inventive idea claimed below being departed from.

Relative terminology such as "above" and "below" is used in the disclosure and in the claims only to describe the relationship of certain elements in relation to others when the mechanism 1 is in the normal working position and must not be interpreted as being limited to this precise position.

## Claims

1. Mechanism (1) for preparing puff pastry (5) conveyed on a belt (7) preferably coming from a hopper and from an extruder **characterised in that** it has a motor unit (2) that generates a rotational advancing movement in the direction of movement of the belt (7) underneath of a device (15) with several idle rotatable rollers (3) that are substantially free to rotate on themselves, that, by resting and compressing in calibrated interference the puff pastry (5) advancing by means of said belt (7) underneath kneads and extends the puff pastry (5) rolling it before the cutting unit, or the shredder for forming the final product.

2. Mechanism for preparing puff pastry conveyed on a belt according to claim 1, **characterised in that** the motor unit (2) has a preferably electric known speed variator with the function of continuously varying the rotation value (11) in relation to the advancing speed (10) value of the belt (7) that conveys the puff pastry (5) above to be kneaded and stretched.

3. Mechanism for preparing puff pastry conveyed on a belt according to claim 1, **characterised in that** the device (15) with several idle rotatable rollers (3) has circular end flanges (9) made integral with the motor shaft (4) and made with a profile suitable for supporting said idle rollers (3) rotating on themselves.

4. Mechanism for preparing puff pastry conveyed on a belt according to claim 1, **characterised in that** the idle rotating rollers (3) are fixed to the side plates of the articulated meshes of a driving chain for generating in said rotating rollers movement trajectories that are decomposable into straight and circular portions.

5. Mechanism for preparing puff pastry conveyed on a belt according to claim 1, **characterised in that** the interference calibration between the idle rotatable roller (3) and the puff pastry (5) underneath is regulated by a lever mechanism (8), of known type, that is able to establish precise millimetric interference values between said rollers (3) and the puff pastry (5).
